# EUROPEAN PATENT APPLICATION

(11) **EP 4 810 338 A1**
(43) Date of publication of application: **23.09.2026**
(21) Application number: 25226709.1
(22) Date of filing: 23.12.2025
(51) Int. Cl.: B60W 30/09, B60W 30/095, B60W 60/00

(54) **AVOIDANCE PLANNING METHOD AND APPARATUS FOR VEHICLE MEETING SCENARIO, MEDIUM AND DEVICE**

(30) Priority: 19.03.2025 CN 202510326926
(71) Applicant: Momenta (Suzhou) Technology Co., Ltd., Suzhou City, Jiangsu 215100 (CN)
(72) Inventor: ZHANG, Jiaxu, Suzhou, 215100 (CN); SUN, Gang, Suzhou, 215100 (CN); TENG, Ting, Suzhou, 215100 (CN); LEI, Hong, Suzhou, 215100 (CN); WANG, Tengfei, Suzhou, 215100 (CN)
(74) Representative: Noréns Patentbyrå AB

(57) **Abstract**

Provided are an avoidance planning method and apparatus for a vehicle meeting scenario, a medium and a device, and the method includes: acquiring a host-vehicle starting point, a host-vehicle ending point, an oncoming-vehicle starting point and an oncoming-vehicle ending point; generating a first avoidance curve taking the host-vehicle starting point as a starting point and taking the host-vehicle ending point as an ending point, and generating a second avoidance curve taking the oncoming-vehicle starting point as a starting point and taking the oncoming-vehicle ending point as an ending point; sampling the first avoidance curve and the second avoidance curve, constituting an initial rough trajectory pair set based on sampling points on the first avoidance curve and sampling points on the second avoidance curve, and screening out a target rough trajectory pair set from the initial rough trajectory pair set, rough trajectory pairs included in the target rough trajectory pair set at least causing no vehicle collision risk; and establishing a host-vehicle fine trajectory planning model based on a kinematic constraint of a host-vehicle, a speed limit constraint of the host-vehicle, and a host-vehicle optimization objective, taking a host-vehicle rough trajectory as an initial solution of the model to perform iterative calculation, and taking an optimal solution of the model as a target planning trajectory of the host-vehicle.

## Description

### TECHNICAL FIELD

The present disclosure relates to the field of intelligent driving technologies, and in particular, to an avoidance planning method and apparatus for a vehicle meeting scenario, a medium and a device.

### BACKGROUND

With an increasing number of intelligent driving vehicles, intelligent driving vehicles inevitably meet other vehicles during travelling on roads. Vehicle meeting refers to vehicles traveling in opposite directions (a host-vehicle and an oncoming vehicle) passing each other at a same location at a same moment. Traditional vehicle meeting avoidance methods are avoidance methods based on fixed rules. In scenarios such as heavy traffic, narrow roads, and intersections, the traditional meeting-vehicle avoidance methods will cause jerky feelings during avoidance, reducing the comfort of passengers, and may also lead to a collision risk.

### SUMMARY

The present disclosure provides an avoidance planning method and apparatus for a vehicle meeting scenario, a medium and a device, aiming to solve the problem that an avoidance method based on fixed rules results in reduced comfort and safety.

The technical solutions are as follows.

In a first aspect, an embodiment of the present disclosure provides a trajectory planning method for interactive vehicles at intersections, including: acquiring a host-vehicle starting point, a host-vehicle ending point, an oncoming-vehicle starting point and an oncoming-vehicle ending point, the host-vehicle ending point and the oncoming-vehicle ending point being planned position points after two vehicles complete avoidance interaction; generating a first avoidance curve taking the host-vehicle starting point as a starting point and taking the host-vehicle ending point as an ending point, and generating a second avoidance curve taking the oncoming-vehicle starting point as a starting point and taking the oncoming-vehicle ending point as an ending point; respectively sampling the first avoidance curve and the second avoidance curve, constituting an initial rough trajectory pair set based on sampling points on the first avoidance curve and sampling points on the second avoidance curve, and screening out a target rough trajectory pair set from the initial rough trajectory pair set, rough trajectory pairs included in the target rough trajectory pair set at least causing no vehicle collision risk; and establishing a host-vehicle fine trajectory planning model based on a kinematic constraint of a host-vehicle, a speed limit constraint of the host-vehicle, and a host-vehicle optimization objective, taking a host-vehicle rough trajectory in the target rough trajectory pair set as an initial solution of the host-vehicle fine trajectory planning model to perform iterative calculation, and taking an optimal solution of the host-vehicle fine trajectory planning model as a target planning trajectory of the host-vehicle.

According to the above scheme, it can be seen that the embodiments of the present disclosure can first respectively generate the avoidance curve for the host-vehicle and the oncoming vehicle, perform sampling and screening on the avoidance curve to obtain the target rough trajectory pair set, and establish the host-vehicle fine trajectory planning model based on various constraint conditions of the host-vehicle and the host-vehicle optimization objective. Then, the host-vehicle rough trajectory in the target rough trajectory pair set is taken as a warm start item of the model, and the model is performed iterative solution. As a result, the solution efficiency of the model is improved, and the planning accuracy of the optimal solution is improved, so that the planned trajectory of avoidance is more smooth and comfortable, thereby improving the safety of vehicle meeting avoidance. In addition, the intersection passing efficiency can be improved for the intersection avoidance scenario.

In a possible implementation, the first avoidance curve includes a sine-cosine curve with a 1/2 period, and the second avoidance curve includes a sine-cosine curve with a 1/2 period.

In a possible implementation, the screening out the target rough trajectory pair set from the initial rough trajectory pair set includes: traversing each rough trajectory pair in the initial rough trajectory pair set; in a case that there is an intersection between two vehicle model contours generated by a currently traversed rough trajectory pair, deleting the currently traversed rough trajectory pair; in a case that there is no intersection between two vehicle model contours generated by a currently traversed rough trajectory pair, and a distance between the currently traversed rough trajectory pair is greater than a preset distance threshold, deleting the currently traversed rough trajectory pair; and after traversing all rough trajectory pairs, constituting the target rough trajectory pair set by remaining rough trajectory pairs.

According to the above scheme, it can be seen that the embodiments of the present disclosure can quickly eliminate rough trajectory pairs with collision risks by determining whether there is an intersection between vehicle model contours corresponding to each rough trajectory pair and whether the distance between each rough trajectory pair is greater than a preset distance threshold, thereby improving the safety of the target rough trajectory pair set.

In a possible implementation, the host-vehicle fine trajectory planning model includes: $min \left({J}_{N}+{\sum }_{i = 0}^{N - 1} {J}_{i}\right) ;$ $s . t . \left\{\begin{matrix}{E}_{i} & i = 0 , 1 , … , N \\ {I}_{i} & i = 0 , 1 , … , N\end{matrix}\right. ;$ where $\begin{matrix}{J}_{i} = {W}_{i , x} {\left({x}_{i}-{x}_{i , ref}\right)}^{2} + {W}_{i , y} {\left({y}_{i}-{y}_{i , ref}\right)}^{2} + \\ {W}_{i , θ} {\left({θ}_{i}-{θ}_{i , ref}\right)}^{2} + {W}_{i , κ} {\left({κ}_{i}-{κ}_{i , ref}\right)}^{2} + {W}_{i , u} {u}_{i}^{2} ;\end{matrix}$ $\begin{matrix}{J}_{N} = {W}_{N , x} {\left({x}_{N}-{x}_{N , ref}\right)}^{2} + {W}_{N , y} {\left({y}_{N}-{y}_{N , ref}\right)}^{2} + \\ {W}_{N , θ} {\left({θ}_{N}-{θ}_{N , ref}\right)}^{2} + {W}_{N , κ} {\left({κ}_{N}-{κ}_{N , ref}\right)}^{2} ;\end{matrix}$ where *J_{N}* denotes the host-vehicle optimization objective at moment *N, Jᵢ* denotes the host-vehicle optimization objective at moment *i, W_{i,x}, W_{i,y}, W_{i,θ},* W_{i,κ}, *W_{i,u},* W_{N,x}, *W_{N,y}, W_{N,θ}, and W_{N,κ}* respectively denote weight coefficients, *xᵢ* denotes a planning longitudinal coordinate of the host-vehicle at moment i, *x_{i,ref}* denotes a reference longitudinal coordinate of the host-vehicle at moment *i, yᵢ* denotes a planning lateral coordinate of the host-vehicle at moment *i, y_{i,ref}* denotes a reference lateral coordinate of the host-vehicle at moment *i, θᵢ* denotes a planning yaw angle of the host-vehicle at moment *i, θ_{i,ref}* denotes a reference yaw angle of the host-vehicle at moment *i, κᵢ* denotes a planning trajectory curvature of the host-vehicle at moment *i, κ_{i,ref}* denotes a reference trajectory curvature of the host-vehicle at moment *i, uᵢ* denotes a planning control quantity of the host-vehicle at moment *i, x_{N}* denotes a planning longitudinal coordinate of the host-vehicle at moment N, *x_{N,ref}* denotes a reference longitudinal coordinate of the host-vehicle at moment N, *y_{N}* denotes a planning lateral coordinate of the host-vehicle at moment N, *y_{N,ref}* denotes a reference lateral coordinate of the host-vehicle at moment N, *θ_{N}* denotes a planning yaw angle of the host-vehicle at moment N, *θ_{N,ref}* denotes a reference yaw angle of the host-vehicle at moment N, *κ_{N}* denotes a planning trajectory curvature of the host-vehicle at moment N, *κ_{N,ref}* denotes a reference trajectory curvature of the host-vehicle at moment N, *Eᵢ* denotes a set of kinematic constraints of the host-vehicle at moment *i, Iᵢ* denotes a set of speed limit constraints of the host-vehicle at moment *i*, and an initial value of a planned trajectory in the host-vehicle fine trajectory planning model is the host-vehicle rough trajectory.

In a possible implementation, the speed limit constraint is generated based on a maximum speed constraint of the host-vehicle, a speed limit constraint of a distance from the host-vehicle to an obstacle, and a curvature speed limit constraint of a host-vehicle planning trajectory.

In a possible implementation, the speed limit constraint includes: $0 \leq {ν}_{i} \leq min \left\{\frac{{d}_{i}}{{d}_{max}}{ν}_{max},\frac{2 {δ}_{max} - {δ}_{i}}{{δ}_{max}}{ν}_{max},{ν}_{max}\right\} ;$ where *vₖ* denotes the planned speed of the host-vehicle at moment *i, dᵢ* denotes a distance between the host-vehicle and an obstacle at moment *i, dₘₐₓ* denotes the constraint activation coefficient, *vₘₐₓ* denotes the maximum speed constraint of the host-vehicle, and *δₘₐₓ* denotes the maximum front wheel steering angle of the host-vehicle.

In a second aspect, an embodiment of the present disclosure provides an avoidance planning apparatus for a vehicle meeting scenario, including an acquisition unit, a generation unit, a sampling unit, a screening unit, an establishment unit, and a solution unit. The acquisition unit is configured to acquire a host-vehicle starting point, a host-vehicle ending point, an oncoming-vehicle starting point and an oncoming-vehicle ending point, the host-vehicle ending point and the oncoming-vehicle ending point being planned position points after two vehicles complete avoidance interaction. The generation unit is configured to generate a first avoidance curve taking the host-vehicle starting point as a starting point and taking the host-vehicle ending point as an ending point, and generate a second avoidance curve taking the oncoming-vehicle starting point as a starting point and taking the oncoming-vehicle ending point as an ending point. The sampling unit is configured to respectively sample the first avoidance curve and the second avoidance curve, and construct an initial rough trajectory pair set based on sampling points on the first avoidance curve and sampling points on the second avoidance curve. The screening unit is configured to screen out a target rough trajectory pair set from the initial rough trajectory pair set, rough trajectory pairs included in the target rough trajectory pair set at least causing no vehicle collision risk. The establishment unit is configured to establish a host-vehicle fine trajectory planning model based on a kinematic constraint of a host-vehicle, a speed limit constraint of the host-vehicle, and a host-vehicle optimization objective. The solution unit is configured to take a host-vehicle rough trajectory in the target rough trajectory pair set as an initial solution of the host-vehicle fine trajectory planning model to perform iterative calculation, and take an optimal solution of the host-vehicle fine trajectory planning model as a target planning trajectory of the host-vehicle.

In a possible implementation, the first avoidance curve includes a sine-cosine curve with a 1/2 period, and the second avoidance curve includes a sine-cosine curve with a 1/2 period.

In a possible implementation, the screening unit includes a traversing module, a deletion module, and a constituent module. The traversing module is configured to traverse each rough trajectory pair in the initial rough trajectory pair set. The deletion module is configured to delete a currently traversed rough trajectory pair in a case that there is an intersection between two vehicle model contours generated by a currently traversed rough trajectory pair, and delete a currently traversed rough trajectory pair in a case that there is no intersection between two vehicle model contours generated by a currently traversed rough trajectory pair, and a distance between the currently traversed rough trajectory pair is greater than a preset distance threshold. The constituent module is configured to, after traversing all rough trajectory pairs, constitute the target rough trajectory pair set by remaining rough trajectory pairs.

In a possible implementation, the host-vehicle fine trajectory planning model includes: $min \left({J}_{N}+{\sum }_{i = 0}^{N - 1} {J}_{i}\right) ;$ $s . t . \left\{\begin{matrix}{E}_{i} & i = 0 , 1 , … , N \\ {I}_{i} & i = 0 , 1 , … , N\end{matrix}\right. ;$ where $\begin{matrix}{J}_{i} = {W}_{i , x} {\left({x}_{i}-{x}_{i , ref}\right)}^{2} + {W}_{i , y} {\left({y}_{i}-{y}_{i , ref}\right)}^{2} + \\ {W}_{i , θ} {\left({θ}_{i}-{θ}_{i , ref}\right)}^{2} + {W}_{i , κ} {\left({κ}_{i}-{κ}_{i , ref}\right)}^{2} + {W}_{i , u} {u}_{i}^{2} ;\end{matrix}$ $\begin{matrix}{J}_{N} = {W}_{N , x} {\left({x}_{N}-{x}_{N , ref}\right)}^{2} + {W}_{N , y} {\left({y}_{N}-{y}_{N , ref}\right)}^{2} + \\ {W}_{N , θ} {\left({θ}_{N}-{θ}_{N , ref}\right)}^{2} + {W}_{N , κ} {\left({κ}_{N}-{κ}_{N , ref}\right)}^{2} ;\end{matrix}$ where *J_{N}* denotes the host-vehicle optimization objective at moment *N, Jᵢ* denotes the host-vehicle optimization objective at moment *i, W_{i,x}, W_{i,y}, W_{i,θ},* W_{i,κ}, *W_{i,u},* W_{N,x}, *W_{N,y}, W_{N,θ},* and *W_{N,κ}* respectively denote weight coefficients, *xᵢ* denotes a planning longitudinal coordinate of the host-vehicle at moment i, *x_{i,ref}* denotes a reference longitudinal coordinate of the host-vehicle at moment *i, yᵢ* denotes a planning lateral coordinate of the host-vehicle at moment *i, y_{i,ref}* denotes a reference lateral coordinate of the host-vehicle at moment *i, θᵢ* denotes a planning yaw angle of the host-vehicle at moment *i, θ_{i,ref}* denotes a reference yaw angle of the host-vehicle at moment *i, κᵢ* denotes a planning trajectory curvature of the host-vehicle at moment *i, κ_{i,ref}* denotes a reference trajectory curvature of the host-vehicle at moment *i, uᵢ* denotes a planning control quantity of the host-vehicle at moment *i, x_{N}* denotes a planning longitudinal coordinate of the host-vehicle at moment N, *x_{N,ref}* denotes a reference longitudinal coordinate of the host-vehicle at moment N, *y_{N}* denotes a planning lateral coordinate of the host-vehicle at moment N, *y_{N,ref}* denotes a reference lateral coordinate of the host-vehicle at moment N, *θ_{N}* denotes a planning yaw angle of the host-vehicle at moment N, *θ_{N,ref}* denotes a reference yaw angle of the host-vehicle at moment N, *κ_{N}* denotes a planning trajectory curvature of the host-vehicle at moment N, *κ_{N,ref}* denotes a reference trajectory curvature of the host-vehicle at moment N, *Eᵢ* denotes a set of kinematic constraints of the host-vehicle at moment *i, Iᵢ* denotes a set of speed limit constraints of the host-vehicle at moment *i*, and an initial value of a planned trajectory in the host-vehicle fine trajectory planning model is the host-vehicle rough trajectory.

In a possible implementation, the speed limit constraint is generated based on a maximum speed constraint of the host-vehicle, a speed limit constraint of a distance from the host-vehicle to an obstacle, and a curvature speed limit constraint of a host-vehicle planning trajectory.

In a possible implementation, the speed limit constraint includes: $0 \leq {ν}_{i} \leq min \left\{\frac{{d}_{i}}{{d}_{max}}{ν}_{max},\frac{2 {δ}_{max} - {δ}_{i}}{{δ}_{max}}{ν}_{max},{ν}_{max}\right\} ;$ where *vₖ* denotes the planned speed of the host-vehicle at moment *i, dᵢ* denotes a distance between the host-vehicle and the obstacle at moment *i, dₘₐₓ* denotes the constraint activation coefficient, *vₘₐₓ* denotes the maximum speed constraint of the host-vehicle, and *δₘₐₓ* denotes the maximum front wheel steering angle of the host-vehicle.

According to the above scheme, it can be seen that the embodiments of the present disclosure can first respectively generate the avoidance curve for the host-vehicle and the oncoming vehicle, perform sampling and screening on the avoidance curve to obtain the target rough trajectory pair set, and establish the host-vehicle fine trajectory planning model based on various constraint conditions of the host-vehicle and the host-vehicle optimization objective. Then, the host-vehicle rough trajectory in the target rough trajectory pair set is taken as a warm start item of the model, and the model is performed iterative solution. As a result, the solution efficiency of the model is improved, and the planning accuracy of the optimal solution is improved, so that the planned trajectory of avoidance is more smooth and comfortable, thereby improving the safety of vehicle meeting avoidance. In addition, the intersection passing efficiency can be improved for the intersection avoidance scenario.

In a third aspect, an embodiment of the present disclosure provides a computer-readable storage medium on which a computer program is stored. The program, when executed by a processor, is configured to implement the method according to any one of the possible implementations in the first aspect.

In a fourth aspect, an embodiment of the present disclosure provides an electronic device, including: one or more processors. The processor is coupled to a storage apparatus that is configured to store one or more programs. The one or more programs, when executed by the one or more processors, is configured to cause the electronic device to implement the method according to any possible implementation in the first aspect.

In a fifth aspect, an embodiment of the present disclosure provides a vehicle, which includes the apparatus according to any one of the possible implementations in the second aspect, or includes the electronic device in the fourth aspect.

In a sixth aspect, an embodiment of the present disclosure provides a computer program product, which includes instructions that, when running on a computer or a processor, cause the computer or the processor to implement the method according to any possible implementation in the first aspect.

### BRIEF DESCRIPTION OF DRAWINGS

To better illustrate embodiments of the present disclosure or the technical solutions in the related art, the drawings, which are intended to be used in the description of the embodiments or the related art, are briefly described as below. It is clear that the drawings in the following description are merely some embodiments of the present disclosure. For those skilled in the art, other drawings may be obtained according to these drawings without creative effort.
FIG. 1 is a schematic flowchart of an avoidance planning method for a vehicle meeting scenario according to an embodiment of the present disclosure;
FIG. 2 is an example diagram of generation of an avoidance curve according to an embodiment of the present disclosure;
FIG. 3 is a block diagram of the composition of an avoidance planning apparatus for a vehicle meeting scenario according to an embodiment of the present disclosure; and
FIG. 4 is a schematic structural diagram of an electronic device or a computer device according to an embodiment of the present disclosure.

### DESCRIPTION OF EMBODIMENTS

Technical solutions in the embodiments of the present disclosure will be clearly and completely described below in combination with the drawings in the embodiments of the present disclosure. It should be noted that, the described embodiments are merely some but not all of the embodiments of the present disclosure. Based on the embodiments of the present disclosure, all other embodiments obtained by those ordinary skilled in the art without creative efforts shall fall within the protection scope of the present disclosure.

It should be noted that the embodiments of the present disclosure and features in the embodiments may be combined with each other without conflict. Terms "include" and "have" and any variations thereof in the embodiments and drawings of the present disclosure are intended to cover non-exclusive inclusion. For example, a process, a method, a system, a product, or a device containing a series of steps or units may not be limited to the listed steps or units, but also may optionally include steps or units that are not listed, or also may optionally include other steps or units inherent to the process, the method, the product, or the device.

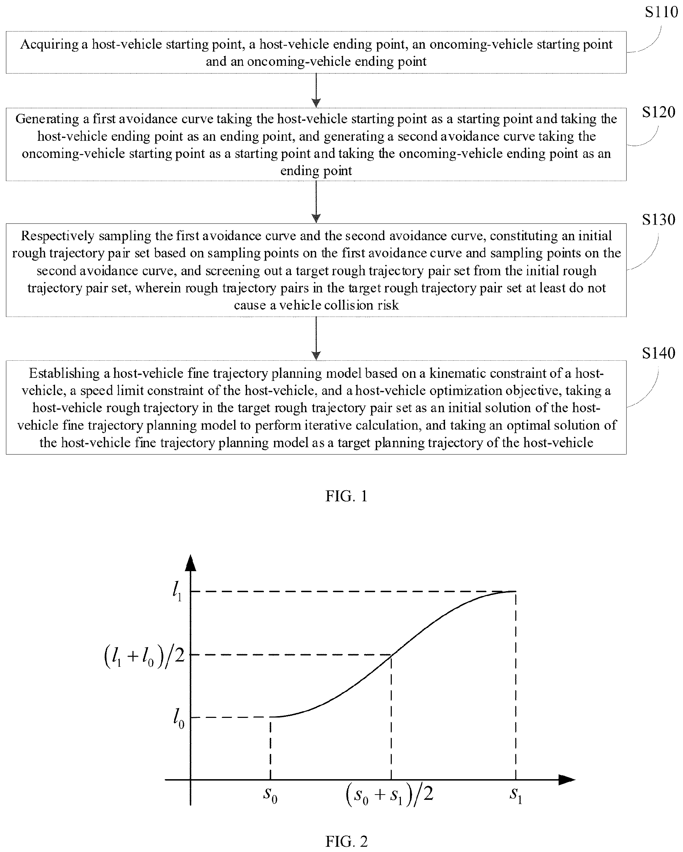

FIG. 1 is a schematic flowchart of an avoidance planning method for a vehicle meeting scenario. The method may be applied to an electronic device or a computer device, and may be specifically applied to a vehicle or a server, and may be used in urban road navigated assisted driving scenarios, autonomous valet parking scenarios, etc. The method may include the following steps.

At S110, a host-vehicle starting point, a host-vehicle ending point, an oncoming-vehicle starting point and an oncoming-vehicle ending point are acquired.

The host-vehicle ending point and the oncoming-vehicle ending point are planned position points after two vehicles complete avoidance interaction. In general, vehicle driving directions of the host-vehicle starting point and the host-vehicle ending point are the same, and vehicle driving directions of the oncoming-vehicle starting point and the oncoming-vehicle ending point are the same.

At S120, a first avoidance curve is generated taking the host-vehicle starting point as a starting point and taking the host-vehicle ending point an ending point, and a second avoidance curve is generated taking the oncoming-vehicle starting point as a starting point and taking the oncoming-vehicle ending point as an ending point.

The first avoidance curve and the second avoidance curve may be curves whose curve equations are set according to actual vehicle avoidance experience, and the overall trend of the curves is that the two first gradually move away from each other, and then gradually return to the driving direction at the starting point. For example, the first avoidance curve includes a sine-cosine curve with a 1/2 period, and the second avoidance curve includes a sine-cosine curve with a 1/2 period. Alternatively, the first avoidance curve and the second avoidance curve include an N-order polynomial curve.

The method for generating any avoidance curve is described below by taking a sine curve as an example.

Given that coordinates of the starting point and ending point of the path in the SL coordinate system (also known as the Frenet coordinate system) are (*s*₀,*l*₀) and (*s*₁*,l*₁*),* the sine curve connecting the starting point and the ending point can be expressed as: $l = a + b * sin \left(c*s+d\right)$

As shown in FIG. 2, the coefficients a, b, c, and d of the sine curve are established with the coordinates of the starting point and the ending point.

A vertical displacement of the sine curve is: $a = \frac{{l}_{0} + {l}_{1}}{2}$

An amplitude of the sine curve is: $b = \frac{{l}_{1} - {l}_{0}}{2}$

A period of the sine curve is: $T = \frac{2 π}{c} = 2 \left({s}_{1}-{s}_{0}\right)$

After further processing, it can be obtained that: $c = \frac{π}{{s}_{1} - {s}_{0}}$

A phase shift of the sine curve is: $- \frac{d}{c} = \frac{{s}_{0} + {s}_{1}}{2}$

After further processing, it can be obtained that: $d = - \frac{π}{2} \frac{{s}_{0} + {s}_{1}}{{s}_{1} - {s}_{0}}$

At S130, the first avoidance curve and the second avoidance curve are respectively sampled, an initial rough trajectory pair set is constituted based on sampling points on the first avoidance curve and sampling points on the second avoidance curve, and a target rough trajectory pair set is screened out from the initial rough trajectory pair set. Rough trajectory pairs included in the target rough trajectory pair set at least do not cause a vehicle collision risk.

The electronic device may respectively perform uniform sampling on the first avoidance curve and the second avoidance curve, or may respectively perform non-uniform sampling on the first avoidance curve and the second avoidance curve, but sampling manners of the two need to be consistent. After obtaining the sampling points on the first avoidance curve and the sampling points on the second avoidance curve, the sampling points on the first avoidance curve and the sampling points on the second avoidance curve can be paired one by one to form trajectory pairs, so as to obtain the initial rough trajectory pair set. For example, when there are ten sampling points on each of the two avoidance curves, the initial rough trajectory pair set includes 100 rough trajectory pairs.

After obtaining the initial rough trajectory pair set, a trajectory pair screening rule may be configured based on factors such as safety, passing efficiency, and comfort, thereby obtaining a target rough trajectory pair set that satisfies requirements of safety, passing efficiency, and comfort.

In an embodiment of the present disclosure, the screening method may include the followings.

Each rough trajectory pair in the initial rough trajectory pair set is traversed. When there is an intersection between two vehicle model contours generated by a currently traversed rough trajectory pair, the currently traversed rough trajectory pair is deleted. When there is no intersection between the two vehicle model contours generated by the currently traversed rough trajectory pair, and a distance between the currently traversed rough trajectory pair is greater than a preset distance threshold, the currently traversed rough trajectory pair is deleted. After traversing all rough trajectory pairs, the target rough trajectory pair set is constituted with the remaining rough trajectory pairs. The preset distance threshold may be determined according to actual experience, for the purpose of constraining the distance between the two vehicles not to be too far apart.

According to the above-described scheme, it can be seen that the embodiments of the present disclosure can quickly eliminate rough trajectory pairs with collision risks by determining whether there is an intersection between vehicle model contours corresponding to each rough trajectory pair and whether the distance between each rough trajectory pair is greater than a preset distance threshold, thereby improving the safety of the target rough trajectory pair set.

At S140, a host-vehicle fine trajectory planning model is established based on a kinematic constraint of a host-vehicle, a speed limit constraint of the host-vehicle, and a host-vehicle optimization objective, a host-vehicle rough trajectory in the target rough trajectory pair set is taken as an initial solution of the host-vehicle fine trajectory planning model to perform iterative calculation, and an optimal solution of the host-vehicle fine trajectory planning model is taken as a target planning trajectory of the host-vehicle.

The kinematic constraint of the host-vehicle includes a constraint condition generated based on the kinematic equations of the host-vehicle, and the speed limit constraint includes a speed limit constraint determined based on a distance between the host-vehicle and an obstacle and a speed limit constraint determined based on a curvature. According to the embodiments of the present disclosure, the host-vehicle fine trajectory planning model can be solved by adopting an augmented Lagrangian method.

Various constraints are introduced below.

### (1) Kinematic constraint of the host-vehicle

The system state quantity [*x*(*s*) *y*(*s*) *θ*(*s*) *κ*(*s*)]^{T} is defined by taking the path length *s* as an independent variable, and the control quantity u(*s*) = *κ'*(*s*) is defined by taking the path length as an independent variable, then the kinematic equation of the host-vehicle can be expressed as: $\left\{\begin{matrix}κ ′ \left(s\right) = dκ / ds = u \left(s\right) \\ θ ′ \left(s\right) = dθ / ds = κ \left(s\right) \\ x ′ \left(s\right) = dx / ds = cos \left(θ\left(s\right)\right) \\ y ′ \left(s\right) = dy / ds = sin \left(θ\left(s\right)\right)\end{matrix}\right.$ where x denotes a longitudinal coordinate, *y* denotes a lateral coordinate, *θ* denotes a yaw angle, *κ* denotes a curvature of a trajectory, *κ*' denotes a rate of change of the curvature, and the path length is also a length of the trajectory.

The sampling interval *hᵢ* is taken as a variable to be optimized, and calculus operation is performed on Equation (8) to obtain the derivation relationship of the system state quantities at adjacent moments as: $\left\{\begin{matrix}{κ}_{i + 1} = {κ}_{i} + {u}_{i} {h}_{i} \\ {θ}_{i + 1} = {θ}_{i} + {κ}_{i} {h}_{i} + \frac{1}{2} {u}_{i} {h}_{i}^{2} \\ {x}_{i + 1} = {x}_{i} + \int cos \left(θ\left(s\right)\right) ds = {x}_{i} + {\int }_{0}^{{h}_{i}} cos \left({θ}_{i}+{κ}_{i}s+\frac{1}{2}{u}_{i}{s}^{2}\right) ds \\ {y}_{i + 1} = {y}_{i} + \int sin \left(θ\left(s\right)\right) ds = {y}_{i} + {\int }_{0}^{{h}_{i}} sin \left({θ}_{i}+{κ}_{i}s+\frac{1}{2}{u}_{i}{s}^{2}\right) ds\end{matrix}\right.$ where *i* denotes the *i*-th moment.

Equation (9) is discretized using the fourth-order Runge-Kutta method, and the discretized kinematic constraints of the host-vehicle can be obtained as: $\left\{\begin{matrix}{κ}_{i + 1} = {κ}_{i} + {u}_{i} {h}_{i} \\ {θ}_{i + 1} = {θ}_{i} + {κ}_{i} {h}_{i} + \frac{1}{2} {u}_{i} {h}_{i}^{2} \\ {x}_{i + 1} = {x}_{i} + \frac{{h}_{i}}{6} \left({x}_{k 1}+2{x}_{k 2}+2{x}_{k 3}+{x}_{k 4}\right) \\ {y}_{i + 1} = {y}_{i} + \frac{{h}_{i}}{6} \left({y}_{k 1}+2{y}_{k 2}+2{y}_{k 3}+{y}_{k 4}\right)\end{matrix}\right.$ where *x*_{*k*1} *, x*_{*k*2}, *x*_{*k*3}, *x*_{*k*4}*, y*_{*k*1}*, y*_{*k*2}*, y*_{*k*3} and *y*_{*k*4} can be expressed as: $\left\{\begin{matrix}{x}_{k 1} = cos \left({θ}_{i}\right) \\ {x}_{k 2} = {x}_{k 3} = cos \left({θ}_{i}+{κ}_{i}\left({h}_{i}/2\right)+\frac{1}{2}{u}_{i}{\left({h}_{i}/2\right)}^{2}\right) \\ {x}_{k 4} = cos \left({θ}_{i}+{κ}_{i}{h}_{i}+\frac{1}{2}{u}_{i}{h}_{i}^{2}\right)\end{matrix}\right.$ $\left\{\begin{matrix}{y}_{k 1} = sin \left({θ}_{i}\right) \\ {y}_{k 2} = {y}_{k 3} = sin \left({θ}_{i}+{κ}_{i}\left({h}_{i}/2\right)+\frac{1}{2}{u}_{i}{\left({h}_{i}/2\right)}^{2}\right) \\ {y}_{k 4} = sin \left({θ}_{i}+{κ}_{i}{h}_{i}+\frac{1}{2}{u}_{i}{h}_{i}^{2}\right)\end{matrix}\right.$

### (2) Speed limit constraint of the host-vehicle

The speed limit constraint of the host-vehicle is generated based on a maximum speed constraint of the host-vehicle, a speed limit constraint of a distance from the host-vehicle to an obstacle, and a curvature speed limit constraint of a host-vehicle planning trajectory.

Given that a base point of the obstacle hyperplane is (*x*₀, *y*₀)*,* and the unit base vector of the obstacle hyperplane is (*xₙ, yₙ*), the distance *dᵢ* from the longitudinal coordinate *xᵢ* and the lateral coordinate *yᵢ* of the midpoint of the rear axle of the vehicle at moment *i* to the obstacle is: ${d}_{i} = \left({x}_{i}-{x}_{0}\right) {x}_{n} + \left({y}_{i}-{y}_{0}\right) {y}_{n}$

Using Equation (13), the obstacle distance-based speed limit constraint at moment i is constructed as: $0 \leq {ν}_{i} \leq \frac{d}{{d}_{max}} {ν}_{max}$ where *v*ₘₐₓ is the maximum speed constraint of the host-vehicle, *dₘₐₓ* is the constraint activation coefficient, and *vᵢ* is the speed of the host-vehicle at moment i.

The curvature-based speed limit constraint at moment *i* is constructed as: $0 \leq {ν}_{i} \leq \frac{2 {δ}_{max} - {δ}_{i}}{{δ}_{max}} {ν}_{max}$ where *δ*ₘₐₓ is the maximum front wheel steering angle of the host-vehicle, and *δᵢ* is the front wheel steering angle of the host-vehicle at moment i.

Considering the maximum speed constraint of the host-vehicle, Equation (16) is satisfied: $0 \leq {ν}_{i} \leq {ν}_{max}$

By combining Equations (14), (15), and (16), the speed limit constraint of the host-vehicle can be obtained as: $0 \leq {ν}_{i} \leq min \left\{\frac{{d}_{i}}{{d}_{max}}{ν}_{max},\frac{2 {δ}_{max} - {δ}_{i}}{{δ}_{max}}{ν}_{max},{ν}_{max}\right\}$

After obtaining the kinematic constraint of the host-vehicle, the host-vehicle rough trajectory in the target rough trajectory pair set, and the speed limit constraint of the host-vehicle, the host-vehicle fine trajectory planning model may be first established, and then the augmented Lagrange algorithm may be used to solve the optimal solution of the model.

Considering the constraints described in Equations (10) and (17), a spatio-temporal joint fine trajectory planning model of the host-vehicle can be established, including: $min \left({J}_{N}+{\sum }_{i = 0}^{N - 1} {J}_{i}\right) ;$ $s . t . \left\{\begin{matrix}{E}_{i} & i = 0 , 1 , … , N \\ {I}_{i} & i = 0 , 1 , … , N\end{matrix};\right.$ where $\begin{matrix}{J}_{i} = {W}_{i , x} {\left({x}_{i}-{x}_{i , ref}\right)}^{2} + {W}_{i , y} {\left({y}_{i}-{y}_{i , ref}\right)}^{2} + \\ {W}_{i , θ} {\left({θ}_{i}-{θ}_{i , ref}\right)}^{2} + {W}_{i , κ} {\left({κ}_{i}-{κ}_{i , ref}\right)}^{2} + {W}_{i , u} {u}_{i}^{2} ;\end{matrix}$ $\begin{matrix}{J}_{N} = {W}_{N , x} {\left({x}_{N}-{x}_{N , ref}\right)}^{2} + {W}_{N , y} {\left({y}_{N}-{y}_{N , ref}\right)}^{2} + \\ {W}_{N , θ} {\left({θ}_{N}-{θ}_{N , ref}\right)}^{2} + {W}_{N , κ} {\left({κ}_{N}-{κ}_{N , ref}\right)}^{2} ;\end{matrix}$ where *J_{N}* denotes the host-vehicle optimization objective at moment *N, Jᵢ* denotes the host-vehicle optimization objective at moment *i, W_{i,x}, W_{i,y}, W_{i,θ},* W_{i,κ}, *W_{i,u},* W_{N,x}, *W_{N,y}, W_{N,θ},* and *W_{N,κ}* respectively denote weight coefficients, *xᵢ* denotes a planning longitudinal coordinate of the host-vehicle at moment i, *x_{i,ref}* denotes a reference longitudinal coordinate of the host-vehicle at moment *i, yᵢ* denotes a planning lateral coordinate of the host-vehicle at moment *i, y_{i,ref}* denotes a reference lateral coordinate of the host-vehicle at moment *i, θᵢ* denotes a planning yaw angle of the host-vehicle at moment *i, θ_{i,ref}* denotes a reference yaw angle of the host-vehicle at moment *i, κᵢ* denotes a planning trajectory curvature of the host-vehicle at moment *i, κ_{i,ref}* denotes a reference trajectory curvature of the host-vehicle at moment *i, uᵢ* denotes a planning control quantity of the host-vehicle at moment *i, x_{N}* denotes a planning longitudinal coordinate of the host-vehicle at moment N, *x_{N,ref}* denotes a reference longitudinal coordinate of the host-vehicle at moment N, *y_{N}* denotes a planning lateral coordinate of the host-vehicle at moment N, *y_{N,ref}* denotes a reference lateral coordinate of the host-vehicle at moment N, *θ_{N}* denotes a planning yaw angle of the host-vehicle at moment N, *θ_{N,ref}* denotes a reference yaw angle of the host-vehicle at moment N, *κ_{N}* denotes a planning trajectory curvature of the host-vehicle at moment N, *κ_{N,ref}* denotes a reference trajectory curvature of the host-vehicle at moment N, *Eᵢ* denotes a set of kinematic constraints of the host-vehicle at moment *i, Iᵢ* denotes a set of speed limit constraints of the host-vehicle at moment *i*, and an initial value of a planned trajectory in the host-vehicle fine trajectory planning model is the host-vehicle rough trajectory.

In the same way, a fine trajectory planning model of the other vehicle may also be established based on the kinematic constraint of the other vehicle, the rough trajectory of the other vehicle in the target rough trajectory pair set, and the speed limit constraint of the other vehicle, the optimal solution of the fine trajectory planning model of the other vehicle is taken as the target planning trajectory of the other vehicle, and the target planning trajectory of the other vehicle is sent to the other vehicle for reference by the other vehicle.

The avoidance planning method for the vehicle meeting scenario according to the embodiments of the present disclosure can first respectively generate the avoidance curve for the host-vehicle and the oncoming vehicle, perform sampling and screening on the avoidance curve to obtain the target rough trajectory pair set, and establish the host-vehicle fine trajectory planning model based on various constraint conditions of the host-vehicle and the host-vehicle optimization objective. Then, the host-vehicle rough trajectory in the target rough trajectory pair set is taken as a warm start item of the model, and the model is performed iterative solution. As a result, the solution efficiency of the model is improved, and the planning accuracy of the optimal solution is improved, so that the planned trajectory of avoidance is more smooth and comfortable, thereby improving the safety of vehicle meeting avoidance. In addition, the intersection passing efficiency can be improved for the intersection avoidance scenario.

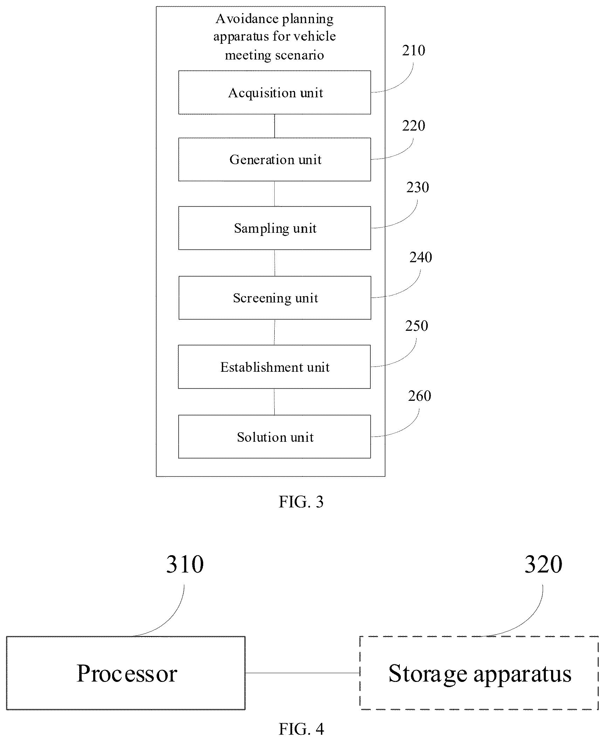

Based on the above method embodiments, another embodiment of the present disclosure provides an avoidance planning apparatus for a vehicle meeting scenario, and as shown in FIG. 3, the apparatus includes an acquisition unit 210, a generation unit 220, a sampling unit 230, a screening unit 240, an establishment unit 250, and a solution unit 260.

The acquisition unit 210 is configured to acquire a host-vehicle starting point, a host-vehicle ending point, an oncoming-vehicle starting point and an oncoming-vehicle ending point, the host-vehicle ending point and the oncoming-vehicle ending point are planned position points after two vehicles complete avoidance interaction.

The generation unit 220 is configured to generate a first avoidance curve taking the host-vehicle starting point as a starting point and taking the host-vehicle ending point an ending point, and generate a second avoidance curve taking the oncoming-vehicle starting point as a starting point and taking the oncoming-vehicle ending point as an ending point.

The sampling unit 230 is configured to respectively sample the first avoidance curve and the second avoidance curve, and construct an initial rough trajectory pair set based on sampling points on the first avoidance curve and sampling points on the second avoidance curve.

The screening unit 240 is configured to screen out a target rough trajectory pair set from the initial rough trajectory pair set, rough trajectory pairs included in the target rough trajectory pair set at least do not cause a vehicle collision risk.

The establishment unit 250 is configured to establish a host-vehicle fine trajectory planning model based on a kinematic constraint of a host-vehicle, a speed limit constraint of the host-vehicle, and a host-vehicle optimization objective.

The solution unit 260 is configured to take a host-vehicle rough trajectory in the target rough trajectory pair set as an initial solution of the host-vehicle fine trajectory planning model to perform iterative calculation, and take an optimal solution of the host-vehicle fine trajectory planning model as a target planning trajectory of the host-vehicle.

In a possible implementation, the first avoidance curve includes a sine-cosine curve with a 1/2 period, and the second avoidance curve includes a sine-cosine curve with a 1/2 period.

In a possible implementation, the screening unit 240 includes a traversing module, a deletion module, and a constituent module.

The traversing module is configured to traverse each rough trajectory pair in the initial rough trajectory pair set.

The deletion module is configured to delete the currently traversed rough trajectory pair when there is an intersection between two vehicle model contours generated by a currently traversed rough trajectory pair, and delete the currently traversed rough trajectory pair when there is no intersection between the two vehicle model contours generated by the currently traversed rough trajectory pair, and a distance between the currently traversed rough trajectory pair is greater than a preset distance threshold.

The constituent module is configured to, after traversing all rough trajectory pairs, constitute the target rough trajectory pair set with the remaining rough trajectory pairs.

In a possible implementation, the host-vehicle fine trajectory planning model includes: $min \left({J}_{N}+{\sum }_{i = 0}^{N - 1} {J}_{i}\right) ;$ $s . t . \left\{\begin{matrix}{E}_{i} & i = 0 , 1 , … , N \\ {I}_{i} & i = 0 , 1 , … , N\end{matrix}\right. ;$ where $\begin{matrix}{J}_{i} = {W}_{i , x} {\left({x}_{i}-{x}_{i , ref}\right)}^{2} + {W}_{i , y} {\left({y}_{i}-{y}_{i , ref}\right)}^{2} + \\ {W}_{i , θ} {\left({θ}_{i}-{θ}_{i , ref}\right)}^{2} + {W}_{i , κ} {\left({κ}_{i}-{κ}_{i , ref}\right)}^{2} + {W}_{i , u} {u}_{i}^{2} ;\end{matrix}$ $\begin{matrix}{J}_{N} = {W}_{N , x} {\left({x}_{N}-{x}_{N , ref}\right)}^{2} + {W}_{N , y} {\left({y}_{N}-{y}_{N , ref}\right)}^{2} + \\ {W}_{N , θ} {\left({θ}_{N}-{θ}_{N , ref}\right)}^{2} + {W}_{N , κ} {\left({κ}_{N}-{κ}_{N , ref}\right)}^{2} ;\end{matrix}$ where *J_{N}* denotes the host-vehicle optimization objective at moment *N, Jᵢ* denotes the host-vehicle optimization objective at moment *i, W_{i,x}, W_{i,y}, W_{i,θ},* W_{i, κ}, *W_{i,u},* W_{N,x}, *W_{N,y}, W_{N,θ}, and W_{N,κ}* respectively denote weight coefficients, *xᵢ* denotes a planning longitudinal coordinate of the host-vehicle at moment i, *x_{i,ref}* denotes a reference longitudinal coordinate of the host-vehicle at moment *i, yᵢ* denotes a planning lateral coordinate of the host-vehicle at moment *i, y_{i,ref}* denotes a reference lateral coordinate of the host-vehicle at moment *i, θᵢ* denotes a planning yaw angle of the host-vehicle at moment *i, θ_{i,ref}* denotes a reference yaw angle of the host-vehicle at moment *i, κᵢ* denotes a planning trajectory curvature of the host-vehicle at moment *i, κ_{i,ref}* denotes a reference trajectory curvature of the host-vehicle at moment *i, uᵢ* denotes a planning control quantity of the host-vehicle at moment *i, x_{N}* denotes a planning longitudinal coordinate of the host-vehicle at moment N, *x_{N,ref}* denotes a reference longitudinal coordinate of the host-vehicle at moment N, *y_{N}* denotes a planning lateral coordinate of the host-vehicle at moment N, *y_{N,ref}* denotes a reference lateral coordinate of the host-vehicle at moment N, *θ_{N}* denotes a planning yaw angle of the host-vehicle at moment N, *θ_{N,ref}* denotes a reference yaw angle of the host-vehicle at moment N, *κ_{N}* denotes a planning trajectory curvature of the host-vehicle at moment N, *κ_{N,ref}* denotes a reference trajectory curvature of the host-vehicle at moment N, *Eᵢ* denotes a set of kinematic constraints of the host-vehicle at moment *i, Iᵢ* denotes a set of speed limit constraints of the host-vehicle at moment *i*, and an initial value of a planned trajectory in the host-vehicle fine trajectory planning model is the host-vehicle rough trajectory.

In a possible implementation, the speed limit constraint is generated based on a maximum speed constraint of the host-vehicle, a speed limit constraint of a distance from the host-vehicle to an obstacle, and a curvature speed limit constraint of a host-vehicle planning trajectory.

In a possible implementation, the speed limit constraint includes: $0 \leq {ν}_{i} \leq min \left\{\frac{{d}_{i}}{{d}_{max}}{ν}_{max},\frac{2 {δ}_{max} - {δ}_{i}}{{δ}_{max}}{ν}_{max},{ν}_{max}\right\} ;$ where *vₖ* denotes the planned speed of the host-vehicle at moment *i, dᵢ* denotes distance between the host-vehicle and the obstacle at moment *i, dₘₐₓ* denotes the constraint activation coefficient, *vₘₐₓ* denotes the maximum speed constraint of the host-vehicle, and *δₘₐₓ* denotes the maximum front wheel steering angle of the host-vehicle.

The avoidance planning apparatus for the vehicle meeting scenario according to the embodiments of the present disclosure can first respectively generate the avoidance curve for the host-vehicle and the oncoming vehicle, perform sampling and screening on the avoidance curve to obtain the target rough trajectory pair set, and establish the host-vehicle fine trajectory planning model based on various constraint conditions of the host-vehicle and the host-vehicle optimization objective. Then, the host-vehicle rough trajectory in the target rough trajectory pair set is taken as a warm start item of the model, and the model is performed iterative solution. As a result, the solution efficiency of the model is improved, and the planning accuracy of the optimal solution is improved, so that the planned trajectory of avoidance is more smooth and comfortable, thereby improving the safety of vehicle meeting avoidance. In addition, the intersection passing efficiency can be improved for the intersection avoidance scenario.

Based on the above-mentioned method embodiments, another embodiment of the present disclosure provides a non-transitory computer-readable storage medium on which a computer program is stored. The program, when executed by a processor, is configured to implement the method according to any one of the above implementations.

Based on the above-mentioned method embodiments, another embodiment of the present disclosure provides an electronic device or a computer device, as shown in FIG. 4, including: one or more processors 310. The processor 310 is coupled to a storage apparatus 320 that is configured to store one or more programs. The one or more programs, when executed by the one or more processors 310, is configured to cause the electronic device or the computer device to implement the method according to any one of the above implementations.

Based on the above-mentioned method embodiments, another embodiment of the present disclosure provides a vehicle. The vehicle includes the apparatus according to any one of the above implementations, or includes the above-mentioned electronic device.

Based on the above embodiments, another embodiment of the present disclosure provides a computer program product, which includes instructions that, when running on a computer or a processor, cause the computer or the processor to implement the method according to any one of the above implementations.

The apparatus embodiments correspond to the method embodiments and have the same technical effects as the method embodiments. For details, please refer to the method embodiments. The apparatus embodiments are obtained based on the method embodiments. Detailed descriptions may be referred to the corresponding method embodiments, which will not be repeated herein. Those skilled in the art can understand that the drawings are merely schematic diagrams of one embodiment, and modules or processes shown in the drawings are not necessarily essential for implementing the present disclosure.

Those skilled in the art can understand that modules in the apparatus of the embodiments may be distributed in the apparatus of the embodiments as described in the embodiments of the present disclosure, or may be located in one or more apparatuses different from the present embodiment with corresponding changes. The modules in the embodiments of the present disclosure may be combined into one module, or can be further divided into a plurality of sub-modules.

It should be noted that, the above-mentioned embodiments are merely for illustrating the present disclosure but not intended to provide any limitation. Although the present disclosure has been described in detail with reference to the above-described embodiments, it should be understood by those skilled in the art that, it is still possible to modify the technical solutions described in the above-mentioned embodiments or to equivalently replace some of the technical features therein, but these modifications or replacements do not cause the essence of corresponding technical solutions to depart from the scope and the spirt of the present disclosure.

## Claims

1. An avoidance planning method for a vehicle meeting scenario, comprising:
acquiring a host-vehicle starting point, a host-vehicle ending point, an oncoming-vehicle starting point and an oncoming-vehicle ending point, wherein the host-vehicle ending point and the oncoming-vehicle ending point are planned position points after two vehicles complete avoidance interaction;
generating a first avoidance curve taking the host-vehicle starting point as a starting point and taking the host-vehicle ending point as an ending point, and generating a second avoidance curve taking the oncoming-vehicle starting point as a starting point and taking the oncoming-vehicle ending point as an ending point;
respectively sampling the first avoidance curve and the second avoidance curve, constituting an initial rough trajectory pair set based on sampling points on the first avoidance curve and sampling points on the second avoidance curve, and screening out a target rough trajectory pair set from the initial rough trajectory pair set, wherein rough trajectory pairs in the target rough trajectory pair set at least do not cause a vehicle collision risk; and
establishing a host-vehicle fine trajectory planning model based on a kinematic constraint of a host-vehicle, a speed limit constraint of the host-vehicle, and a host-vehicle optimization objective, taking a host-vehicle rough trajectory in the target rough trajectory pair set as an initial solution of the host-vehicle fine trajectory planning model to perform iterative calculation, and taking an optimal solution of the host-vehicle fine trajectory planning model as a target planning trajectory of the host-vehicle.

2. The method according to claim 1, wherein the first avoidance curve comprises a sine-cosine curve with a 1/2 period, and the second avoidance curve comprises a sine-cosine curve with a 1/2 period.

3. The method according to claim 1, wherein said screening out the target rough trajectory pair set from the initial rough trajectory pair set comprises:
traversing each rough trajectory pair in the initial rough trajectory pair set;
in a case that there is an intersection between two vehicle model contours generated by a currently traversed rough trajectory pair, deleting the currently traversed rough trajectory pair;
in a case that there is no intersection between two vehicle model contours generated by a currently traversed rough trajectory pair, and a distance between the currently traversed rough trajectory pair is greater than a preset distance threshold, deleting the currently traversed rough trajectory pair; and
after traversing all rough trajectory pairs, constituting the target rough trajectory pair set by remaining rough trajectory pairs.

4. The method according to claim 1, wherein the host-vehicle fine trajectory planning model comprises: $min \left({J}_{N}+{\sum }_{i = 0}^{N - 1} {J}_{i}\right) ;$ $s . t . \left\{\begin{matrix}{E}_{i} & i = 0 , 1 , … , N \\ {I}_{i} & i = 0 , 1 , … , N\end{matrix}\right. ;$ where $\begin{matrix}{J}_{i} = {W}_{i , x} {\left({x}_{i}-{x}_{i , ref}\right)}^{2} + {W}_{i , y} {\left({y}_{i}-{y}_{i , ref}\right)}^{2} + \\ {W}_{i , θ} {\left({θ}_{i}-{θ}_{i , ref}\right)}^{2} + {W}_{i , κ} {\left({κ}_{i}-{κ}_{i , ref}\right)}^{2} + {W}_{i , u} {u}_{i}^{2} ;\end{matrix}$ $\begin{matrix}{J}_{N} = {W}_{N , x} {\left({x}_{N}-{x}_{N , ref}\right)}^{2} + {W}_{N , y} {\left({y}_{N}-{y}_{N , ref}\right)}^{2} + \\ {W}_{N , θ} {\left({θ}_{N}-{θ}_{N , ref}\right)}^{2} + {W}_{N , κ} {\left({κ}_{N}-{κ}_{N , ref}\right)}^{2} ;\end{matrix}$ where *J_{N}* denotes the host-vehicle optimization objective at moment *N, Jᵢ* denotes the host-vehicle optimization objective at moment *i, W_{i,x}, W_{i,y}, W_{i,θ},* W_{i,κ}, *W_{i,u},* W_{N,x}, *W_{N,y}, W_{N,θ},* and *W_{N,κ}* respectively denote weight coefficients, *xᵢ* denotes a planning longitudinal coordinate of the host-vehicle at moment i, *x_{i,ref}* denotes a reference longitudinal coordinate of the host-vehicle at moment *i, yᵢ* denotes a planning lateral coordinate of the host-vehicle at moment *i, y_{i,ref}* denotes a reference lateral coordinate of the host-vehicle at moment *i, θᵢ* denotes a planning yaw angle of the host-vehicle at moment *i, θ_{i,ref}* denotes a reference yaw angle of the host-vehicle at moment *i, κᵢ* denotes a planning trajectory curvature of the host-vehicle at moment *i, κ_{i,ref}* denotes a reference trajectory curvature of the host-vehicle at moment *i, uᵢ* denotes a planning control quantity of the host-vehicle at moment *i, x_{N}* denotes a planning longitudinal coordinate of the host-vehicle at moment N, *x_{N,ref}* denotes a reference longitudinal coordinate of the host-vehicle at moment N, *y_{N}* denotes a planning lateral coordinate of the host-vehicle at moment N, *y_{N,ref}* denotes a reference lateral coordinate of the host-vehicle at moment N, *θ_{N}* denotes a planning yaw angle of the host-vehicle at moment N, *θ_{N,ref}* denotes a reference yaw angle of the host-vehicle at moment N, *κ_{N}* denotes a planning trajectory curvature of the host-vehicle at moment N, *κ_{N,ref}* denotes a reference trajectory curvature of the host-vehicle at moment N, *Eᵢ* denotes a set of kinematic constraints of the host-vehicle at moment *i, Iᵢ* denotes a set of speed limit constraints of the host-vehicle at moment *i*, and an initial value of a planned trajectory in the host-vehicle fine trajectory planning model is the host-vehicle rough trajectory.

5. The method according to any one of claims 1 to 4, wherein the speed limit constraint is generated based on a maximum speed constraint of the host-vehicle, a speed limit constraint of a distance from the host-vehicle to an obstacle, and a curvature speed limit constraint of a host-vehicle planning trajectory.

6. An avoidance planning apparatus for a vehicle meeting scenario, comprising:
an acquisition unit configured to acquire a host-vehicle starting point, a host-vehicle ending point, an oncoming-vehicle starting point and an oncoming-vehicle ending point, wherein the host-vehicle ending point and the oncoming-vehicle ending point are planned position points after two vehicles complete avoidance interaction;
a generation unit configured to generate a first avoidance curve taking the host-vehicle starting point as a starting point and taking the host-vehicle ending point as an ending point, and generate a second avoidance curve taking the oncoming-vehicle starting point as a starting point and taking the oncoming-vehicle ending point as an ending point;
a sampling unit configured to respectively sample the first avoidance curve and the second avoidance curve, and construct an initial rough trajectory pair set based on sampling points on the first avoidance curve and sampling points on the second avoidance curve;
a screening unit configured to screen out a target rough trajectory pair set from the initial rough trajectory pair set, wherein rough trajectory pairs in the target rough trajectory pair set at least do not cause a vehicle collision risk;
an establishment unit configured to establish a host-vehicle fine trajectory planning model based on a kinematic constraint of a host-vehicle, a speed limit constraint of the host-vehicle, and a host-vehicle optimization objective; and
a solution unit configured to take a host-vehicle rough trajectory in the target rough trajectory pair set as an initial solution of the host-vehicle fine trajectory planning model to perform iterative calculation, and take an optimal solution of the host-vehicle fine trajectory planning model as a target planning trajectory of the host-vehicle.

7. The apparatus according to claim 6, wherein the first avoidance curve comprises a sine-cosine curve with a 1/2 period, and the second avoidance curve comprises a sine-cosine curve with a 1/2 period.

8. The apparatus according to claim 6 or 7, wherein the screening unit comprises:
a traversing module configured to traverse each rough trajectory pair in the initial rough trajectory pair set;
a deletion module configured to delete the currently traversed rough trajectory pair in a case that there is an intersection between two vehicle model contours generated by a currently traversed rough trajectory pair, and delete the currently traversed rough trajectory pair in a case that there is no intersection between two vehicle model contours generated by a currently traversed rough trajectory pair, and a distance between the currently traversed rough trajectory pair is greater than a preset distance threshold; and
a constituent module configured to, after traversing all rough trajectory pairs, constitute the target rough trajectory pair set by remaining rough trajectory pairs.

9. A computer-readable storage medium on which a computer program is stored, wherein the computer program, when executed by a processor, is configured to implement the method according to any one of claims 1 to 5.

10. An electronic device, comprising:
one or more processors, and
a storage apparatus coupled to the one or more processors and configured to store one or more programs, wherein the one or more programs, when executed by the one or more processors, are configured to cause the electronic device to implement the method according to any one of claims 1 to 5.
